# EUROPÄISCHE PATENTSCHRIFT

(11) **EP 2 029 679 B1**
(45) Veröffentlichungstag und Bekanntmachung des Hinweises auf die Patenterteilung: **28.10.2009**
(21) Anmeldenummer: 07729353.8
(22) Anmeldetag: 22.05.2007
(51) Int. Cl.: C09D 123/08

(54) **VERFAHREN ZUM BESCHICHTEN VON KUNSTSTOFF- ODER METALLOBERFLÄCHEN**
PROCESS FOR COATING PLASTIC OR METAL SURFACES
PROCÉDÉ DE REVÊTEMENT DE SURFACES PLASTIQUES OU MÉTALLIQUES

(30) Priorität: 30.05.2006 EP 06114689
(43) Veröffentlichungstag der Anmeldung: 04.03.2009
(73) Patentinhaber: BASF SE, 67056 Ludwigshafen (DE)
(72) Erfinder: PFISTNER, Heike, 67071 Ludwigshafen (DE); FECHTENKÖTTER, Andreas, Singapore 098647 (SG); MÄHLING, Frank-Olaf, 68165 Mannheim (DE); WITTELER, Helmut, 67157 Wachenheim (DE); DIETSCHE, Frank, 69198 Schriesheim (DE); FASSBENDER, Stefan, 67346 Speyer (DE); SIMON, Claudia, 67165 Waldsee (DE)
(86) Internationale Anmeldenummer: PCT/EP2007/054910
(87) Internationale Veröffentlichungsnummer: WO 2007/137963

(56) Entgegenhaltungen:
- WO-A-2006/117158
- WO-A-2007/009909
- DE-A1-102004 027 793
- JP-A- 2003 336 191
- US-A- 4 540 736

## Beschreibung

Die vorliegende Erfindung betrifft ein Verfahren zum Beschichten von Kunststoff- oder Metalloberflächen in mindestens zwei Schritten, dadurch gekennzeichnet, dass man in einem Schritt die betreffende Kunststoff- oder Metalloberfläche mit einer wässrigen Dispersion behandelt, enthaltend
(A) mindestens ein Ethylencopolymer mit einem Molekulargewicht Mₙ im Bereich von 2.000 bis 20.000 g/mol, gewählt aus solchen Ethylencopolymeren, die als Comonomere einpolymerisiert enthalten
   (a) 15,5 bis 19,9 Gew.-% mindestens einer ethylenisch ungesättigten C₃-C₁₀-Carbonsäure und
   (b) 80,1 bis 84,5 Gew.-% Ethylen,
(B) mindestens eine Base,
und dass man danach die betreffende Kunststoff- bzw. Metalloberfläche in mindestens einem weiteren Schritt mit mindestens einer weiteren Schicht versieht.

Wenn man Oberflächen wie z. B. Kunststoff- oder Metalloberflächen mit einer Beschichtung versieht, beispielsweise einer Lackbeschichtung oder einer Farbbeschichtung, die einen ästhetisch schönen Eindruck machen sollen, so beschichtet man in vielen Fällen die betreffende Metall- oder Kunststoffoberfläche nicht direkt mit Lack oder Farbe, sondern versieht sie zunächst mit einer ersten Schicht, die auch als Grundierung oder als Primer bezeichnet wird. Primer bzw. Grundierung sollen dabei verschiedene Aufgaben erfüllen. So sollen sie die Haftung von Lack bzw. Farbe am Metall bzw. Kunststoff verbessern und beispielsweise ein leichtes Abblättern verhindern. Weiterhin wird häufig durch den Primer bzw. die Grundierung ein Schutz der Kunststoff- oder Metalloberfläche erreicht oder zumindest stark verbessert.

In der Vergangenheit enthielten zum Zweck der Grundierung eingesetzte Formulierungen in vielen Fällen Schwermetallverbindungen wie beispielsweise Cr(VI)-Verbindungen. Den Gebrauch von derartigen Formulierungen möchte man jedoch aus Gründen des Gesundheitsschutzes vermeiden. Auch Grundierungen auf Basis von Bleimennige werden vom Verbraucher aus toxikologischen Gründen in vielen Fällen abgelehnt, insbesondere dann, wenn es sich um Beschichtungen handelt, die mit Lebensmitteln in Kontakt kommen können.

Es bestand die Aufgabe, ein Verfahren zum Beschichten von Kunststoff- oder Metalloberflächen bereit zu stellen, durch das man korrosionsgeschützte Kunststoff- bzw. Metalloberflächen mit hoher Oberflächengüte erhält, die gleichzeitig eine hohe Härte aufweisen und mit Lebensmitteln in Kontakt kommen dürfen. Weiterhin bestand die Aufgabe, Formulierungen bereit zu stellen, mit deren Hilfe sich Kunststoff- bzw. Metalloberflächen gut beschichten lassen.

Dementsprechend wurde das eingangs definierte Verfahren gefunden. Weiterhin wurden wässrige Dispersionen gefunden, mit denen sich das erfindungsgemäße Verfahren besonders gut durchführen lässt, sowie ein Verfahren zur Herstellung der erfindungsgemäßen Dispersionen. Weiterhin wurden Ethylencopolymere gefunden, mit denen sich das erfindungsgemäße Verfahren ganz besonders gut durchführen lässt.

Das eingangs definierte Verfahren geht aus von Kunststoff- oder Metalloberflächen. Erfindungsgemäß zu beschichtende Kunststoff- oder Metalloberflächen können strukturiert sein, das heißt im Sinne der vorliegenden Erfindung regelmäßig oder unregelmäßig angeordnete Erhebungen oder Vertiefungen aufweisen, oder vorzugsweise glatt sein, wobei unter glatt zu verstehen ist, dass man mit bloßem Auge keine Strukturierung erkennen kann. Erfindungsgemäß zu beschichtende Kunststoff- oder Metalloberflächen können eben oder gebogen sein und eine beliebige Oberflächengeometrie aufweisen. So sind beispielsweise auch Metallfolien, insbesondere Aluminiumfolien geeignet.

Erfindungsgemäß zu beschichtende Metalloberflächen können aus Edelmetall sein, beispielsweise aus Kupfer oder Silber, oder aus unedlem Metall, wobei Legierungen unter dem Begriff Metall mit subsummiert sind. Beispielsweise können erfindungsgemäße Metalloberflächen aus Eisen, Aluminium, Nickel, Kobalt, Chrom, Titan, Vanadium und insbesondere aus Stahl sein, auch Edelstahl und V2A-Stahl, weiterhin aus Buntmetall, edel oder nicht edel, wie beispielsweise Silber, Messing, Bronzen, Gold oder Kupfer.

Erfindungsgemäß zu beschichtende Kunststoffoberflächen können beispielsweise aus thermoplastischem Kunststoff sein. Geeignete Kunststoffe sind insbesondere Polyethylen, Polypropylen, Polystyrol und Styrolcopolymere wie beispielsweise ASA, insbesondere in Form von Folien.

In einer speziellen Ausführungsform der vorliegenden Erfindung handelt es sich bei der erfindungsgemäß zu beschichtenden Kunststoff- oder Metalloberfläche um eine Hartfolie aus Metall, insbesondere Aluminium, oder aus Kunststoff.

Zur Ausübung des erfindungsgemäßen Verfahrens behandelt man die betreffende Kunststoff- oder Metalloberfläche in einem Schritt mit einer wässrigen Dispersion, enthaltend
(A) mindestens ein Ethylencopolymer mit einem Molekulargewicht Mₙ im Bereich von 2.000 bis 20.000 g/mol, gewählt aus solchen Ethylencopolymeren, die als Comonomere einpolymerisiert enthalten
   (a) 15,5 bis 19,9 Gew.-% mindestens einer ethylenisch ungesättigten C₃-C₁₀-Carbonsäure und
   (b) 80,1 bis 84,5 Gew.-% Ethylen,
   im Rahmen der vorliegenden Erfindung auch als Ethylencopolymer (A) bezeichnet, und
(B) mindestens eine Base,
   und versieht man danach die betreffende Kunststoff- bzw. Metalloberfläche in mindestens einem weiteren Schritt mit mindestens einer weiteren Schicht.

Als wässrige Dispersion kann dabei eine wässrige Emulsion oder Suspension verwendet werden.

Ethylencopolymer (A) weist ein Molekulargewicht Mₙ im Bereich von 2.000 bis 20.000 g/mol, bevorzugt 3.500 bis 15.000 g/mol auf, bestimmbar beispielsweise durch Gelpermeationschromatographie (GPC).

Ethylencopolymer (A) wird ausgewählt aus solchen Ethylencopolymeren, die als Comonomere einpolymerisiert enthalten
(a) 15,5 bis 19,9 Gew.-%, bevorzugt 16 bis 19 Gew.-% mindestens einer ethylenisch ungesättigten Carbonsäure und
(b) 80,1 bis 84,5 Gew.-%, bevorzugt 81 bis 84 Gew.-% Ethylen,
bezogen jeweils auf gesamtes eingesetztes Ethylencopolymer (A).

Unter einpolymerisiert enthaltenen Comonomeren werden dabei die Anteile an Comonomer verstanden, die molekular in Ethylencopolymer (A) eingebaut werden.

Vorzugsweise wird als ethylenisch ungesättigte Carbonsäure (a) mindestens eine Carbonsäure der allgemeinen Formel I gewählt, 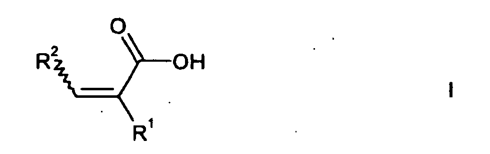 in der die Variablen wie folgt definiert sind:
- R¹ und R²: sind gleich oder verschieden.
- R¹: wird gewählt aus Wasserstoff und
unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
- R²: wird gewählt aus unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl; und ganz besonders bevorzugt Wasserstoff.

In einer Ausführungsform der vorliegenden Erfindung bedeutet R¹ Wasserstoff oder Methyl. Ganz besonders bevorzugt bedeutet R¹ Methyl.

In einer Ausführungsform der vorliegenden Erfindung bedeuten R¹ Wasserstoff oder Methyl und R² Wasserstoff.

Ganz besonders bevorzugt wird als ethylenisch ungesättigte Carbonsäure der allgemeinen Formel I Methacrylsäure eingesetzt.

Wünscht man mehrere ethylenisch ungesättigte Carbonsäuren zur Herstellung von Ethylencopolymer (A) zu verwenden, so kann man zwei verschiedene ethylenisch ungesättigte Carbonsäuren der allgemeinen Formel I einsetzen wie beispielsweise Acrylsäure und Methacrylsäure.

In einer Ausführungsform der vorliegenden Erfindung kann Ethylencopolymer (A) ein oder mehrere weitere Comonomere (c) einpolymerisiert enthalten, beispielsweise Isobuten, Styrol, einen oder mehrere C₁-C₁₀-Alkylester oder ω-Hydroxy-C₂-C₁₀-alkylenester einer ethylenisch ungesättigten C₃-C₁₀-Carbonsäure, beispielsweise Methylacrylat, Ethylacrylat, Methylmethacrylat, Ethylmethacrylat, n-Butylacrylat, 2-Hydroxyethyl-(meth)acrylat, 2-Ethylhexyl(meth)acrylat oder n-Butylmethacrylat.

In einer Ausführungsform der vorliegenden Erfindung enthält Ethylencopolymer (A) insgesamt bis zu 10 Gew.-% ein oder mehrere Comonomere (c) einpolymerisiert, bezogen auf die Summe aus (a) und (b).

In einer anderen, bevorzugten Ausführungsform der vorliegenden Erfindung enthält Ethylencopolymer (A) kein weiteres Comonomer (c) einpolymerisiert.

Das Ethylencopolymer (A) weist eine Schmelzflussrate (MFR) im Bereich von 1 bis 150 g/10 min, bevorzugt 5 bis 15 g/10 min, besonders bevorzugt 8 bis 12 g/10 min auf, gemessen bei 160°C und einer Belastung von 325 g nach EN ISO 1133.

In einer Ausführungsform der vorliegenden Erfindung kann Ethylencopolymer (A) eine Säurezahl im Bereich von 100 bis 150 mg KOH/g Wachs aufweisen, bevorzugt 115 bis 130 mg KOH/g Wachs, bestimmt nach DIN EN 2114.

In einer Ausführungsform der vorliegenden Erfindung weist Ethylencopolymer (A) eine kinematische Schmelzeviskosität ν von mindestens 5.000 mm²/s auf, bevorzugt von mindestens 10.000 mm²/s, bestimmt bei 120°C.

In einer Ausführungsform der vorliegenden Erfindung liegt der Schmelzbereich von Ethylencopolymer (A) im Bereich von 60 bis 110°C, bevorzugt im Bereich von 65 bis 90°C, bestimmt durch DSC nach DIN 51007.

In einer Ausführungsform der vorliegenden Erfindung kann der Schmelzbereich von Ethylencopolymer (A) breit sein und ein Temperaturintervall von mindestens 7 bis höchstens 20°C, bevorzugt mindestens 10°C und höchstens 15°C betreffen.

In einer anderen Ausführungsform der vorliegenden Erfindung ist der Schmelzpunkt von Ethylencopolymer (A) scharf und liegt in einem Temperaturintervall von weniger als 2°C, bevorzugt weniger als 1°C, bestimmt nach DIN 51007.

In einer Ausführungsform der vorliegenden Erfindung beträgt die Dichte von Ethylencopolymer (A) im Bereich von 0,89 bis 1,10 g/cm³, bevorzugt 0,92 bis 0,99 g/cm³, bestimmt nach DIN 53479.

Ethylencopolymere (A) können alternierende Copolymere sein oder vorzugsweise statistische Copolymere.

Erfindungsgemäß eingesetzte Ethylencopolymere (A) aus Ethylen (b) und ethylenisch ungesättigten Carbonsäuren (a) und gegebenenfalls weiteren Comonomeren (c) kann man vorteilhaft durch radikalisch initiierte Copolymerisation unter Hochdruckbedingungen herstellen, beispielsweise in gerührten Hochdruckautoklaven oder in Hochdruckrohrreaktoren und bevorzugt in Kombinationen aus gerührten Hochdruckautoklaven und Hochdruckrohrreaktoren. Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Copolymerisation sind 500 bis 4000 bar, bevorzugt 1500 bis 2500 bar. Bedingungen dieser Art werden im Folgenden auch als Hochdruck bezeichnet. Die Reaktionstemperaturen liegen im Bereich von 170 bis 300°C, bevorzugt im Bereich von 195 bis 280°C.

Die Copolymerisation kann man in Gegenwart eines Reglers durchführen. Als Regler verwendet man beispielsweise Wasserstoff oder mindestens einen aliphatischen Aldehyd oder mindestens ein aliphatisches Keton der allgemeinen Formel II 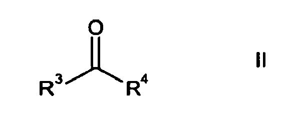 oder Mischungen derselben.

Dabei sind die Reste R³ und R⁴ gleich oder verschieden und ausgewählt aus Wasserstoff;
C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer besonderen Ausführungsform sind die Reste R³ und R⁴ miteinander unter Bildung eines 4- bis 13-gliedrigen Rings kovalent verbunden. So können R³ und R⁴ beispielsweise gemeinsam sein: -(CH₂)₄-, -(CH₂)₅-, -(CH₂)₆, -(CH₂)₇-, -CH(CH₃)-CH₂-CH₂-CH(CH₃)- oder -CH(CH₃)-CH₂-CH₂-CH₂-CH(CH₃)-.

Beispiele für geeignete Regler sind weiterhin alkylaromatische Verbindungen, beispielsweise Toluol, Ethylbenzol oder ein oder mehrere Isomere des Xylols. Beispiele für gut geeignete Regler sind weiterhin Paraffine wie beispielsweise Isododekan (2,2,4,6,6-Pentamethylheptan) oder Isooktan.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus kommerziell erhältlichen Substanzen, sind beispielsweise Didekanoylperoxid, 2,5-Dimethyl-2,5-di(2-ethylhexanoylperoxy)hexan, tert.-Amylperoxy-2-ethylhexanoat, tert.-Amylperoxypivalat, tert.-Butylperoxypivalat, Dibenzoylperoxid, tert.-Butylperoxy-2-ethylhexanoat, tert.-Butylperoxydiethylacetat,
tert.-Butylperoxydiethylisobutyrat, 1,4-Di(tert.-butylperoxycarbonyl)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-(tert.-butylperoxy)butan oder tert.-Butylperoxyacetat;
tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid; oder
aus EP-A 0 813 550 bekannte dimere oder trimere Ketonperoxide.

Als Peroxide sind Di-tert.-butylperoxid, tert.-Butylperoxypivalat, tert.-Amylperoxypivalat, tert.-Butylperoxyisononanoat oder Dibenzoylperoxid oder Gemische derselben besonders geeignet. Als Azoverbindung sei Azobisisobutyronitril ("AlBN") beispielhaft genannt. Radikalstarter werden in für Polymerisationen üblichen Mengen dosiert.

Zahlreiche kommerziell erhältliche organische Peroxide werden mit sogenannten Phlegmatisierern versetzt, bevor sie verkauft werden, um sie besser handhabbar zu machen. Als Phlegmatisierer sind beispielsweise Weißöl oder Kohlenwasserstoffe wie insbesondere Isododekan geeignet. Unter den Bedingungen der Hochdruckpolymerisation können derartige Phlegmatisierer eine molekulargewichtsregelnde Wirkung haben. Im Sinne der vorliegenden Erfindung soll unter dem Einsatz von Molekulargewichtsreglern der zusätzliche Einsatz weiterer Molekulargewichtsregler über den Einsatz der Phlegmatisierer hinaus verstanden werden.

Das Mengenverhältnis der Comonomere (a), (b) und gegebenenfalls (c) bei der Dosierung entspricht üblicherweise nicht genau dem Verhältnis der Einheiten in Ethylencopolymer (A), weil ethylenisch ungesättigte Carbonsäuren im Allgemeinen leichter in Ethylencopolymer (A)eingebaut werden als Ethylen.

Die Comonomere (a), (b) und gegebenenfalls (c) werden üblicherweise gemeinsam oder getrennt dosiert.

Die Comonomere (a), (b) und gegebenenfalls (c) können in einem Kompressor auf den Polymerisationsdruck komprimiert werden. In einer anderen Ausführungsform des erfindungsgemäßen Verfahrens werden die Comonomeren zunächst mit Hilfe einer Pumpe auf einen erhöhten Druck von beispielsweise 150 bis 400 bar, bevorzugt 200 bis 300 bar und insbesondere 260 bar gebracht und danach mit einem Kompressor auf den eigentlichen Polymerisationsdruck.

Die Copolymerisation kann wahlweise in Abwesenheit und in Anwesenheit von Lösemitteln durchgeführt werden, wobei Mineralöle, Weißöl und andere Lösungsmittel, die während der Polymerisation im Reaktor zugegen sind und zum Phlegmatisieren des oder der Radikalstarter verwendet wurden, im Sinne der vorliegenden Erfindung nicht als Lösemittel gelten. Geeignete Lösemittel sind beispielsweise Toluol, Isododekan, Isomere des Xylols.

Im ersten Schritt des erfindungsgemäßen Verfahrens eingesetzte wässrige Dispersion enthält weiterhin mindestens eine Base (B). Bei Base (B) kann es sich beispielsweise um ein basisches Alkalimetallsalz handeln. Als Beispiele für basische Alkalimetallsalze seien basische Kalium- und insbesondere Natriumsalze genannt, bevorzugt sind Kaliumhydroxid, Natriumhydroxid, Natriumcarbonat, Kaliumcarbonat, Natriumhydrogencarbonat, Kaliumhydrogencarbonat. Bevorzugt handelt es sich bei Base (B) um flüchtige Basen, besonders bevorzugt um Amine wie beispielsweise Ethanolamin, Diethanolamin, N-Methyldiethanolamin, 1-Amino-2-propanol, N,N-Dimethylethanolamin, Diethylentriamin, Ethylendiamin, Tetraethylenpentamin und ganz besonders bevorzugt um Ammoniak.

In einer Ausführungsform der vorliegenden Erfindung handelt es sich bei Base (B) um ein Gemisch von mindestens zwei Basen, insbesondere um ein Gemisch von mindestens einem Alkalimetallhydroxid wie beispielsweise Kaliumhydroxid oder insbesondere Natriumhydroxid und Ammoniak oder einem organischem Amin wie Ethanolamin, Diethanolamin, N-Methyldiethanolamin, 1-Amino-2-propanol, Diethylentriamin, Ethylendiamin oder Tetraethylenpentamin.

Im erfindungsgemäßen Verfahren im ersten Schritt eingesetzte wässrige Dispersion enthält in einer Ausführungsform der vorliegenden Erfindung so viel Base (B), dass die betreffende Dispersion einen pH-Wert im Bereich von 7 bis 10, bevorzugt von 8 bis 9,5 aufweist.

In einer Ausführungsform der vorliegenden Erfindung kann im ersten Schritt eingesetzte wässrige Dispersion einen Feststoffgehalt im Bereich von 5 bis 45%, bevorzugt mindestens 10% und besonders bevorzugt im Bereich von 15 bis 30% aufweisen.

In einer Ausführungsform der vorliegenden Erfindung enthält im ersten Schritt eingesetzte wässrige Dispersion einen oder mehrere Zuschlagstoffe (C), beispielsweise ein oder mehrere Carboxylate wie beispielsweise Salze der Zitronensäure, der Weinsäure, der Essigsäure oder der Oxalsäure, ein oder mehrere Filmbildehilfsmittel oder ein oder mehrere Antioxidantien oder Feststoffpartikel, zum Beispiel sind einsetzbar:
- Diatomeen, Naturprodukte, die aus der Calcinierung von Diatomit hervorgehen. Die Hauptbestandteile sind amorphe SiO₂-Modifikationen, begleitet von Aluminum-, Eisenoxiden und anderen Elementen sowie deren silikatischen Verbindungen.
- Perlitte, das sind geglühte, gemahlene selektierte Blähtone vulkanischen Ursprungs (Rhyolite). Ihre Struktur ist blättchenförmig und chemisch als ein Natrium-, Kalium- und/oder Aluminiumsilikat zu beschreiben.
- Bentonite, Montmorillonite sind Tonminerale mit einer hohen Quell- und Adsorptionsfähigkeit.
- Synthetische Materialen, wie polymere vernetzte Partikel.

Bevorzugt werden Carbonat- oder Silikatpartikel, insbesondere Kalziumcarbonat und Schichtsilikate wie beispielsweise Bentonite oder Montmorillonite zur Einstellung der tribologischen Eigenschaften (Reibbeiwerte) oder zur Einstellung der Sauerstoffpermeabiliät wie beispielsweise Talkum oder Glimmer eingesetzt.

Weitere geeignete Zuschlagstoffe sind Korrosionsschutzpigmente, insbesondere Zn-Salze oder organische Korrosionsinhibitoren. Weiterhin können auch Additive, die den Sauerstoffdiffusionsweg aufgrund ihres hohen Aspektverhältnisses innerhalb des Lackes verlängern, wie beispielsweise Talkum oder Glimmer auch in grenzflächenmodifizierter Form zugesetzt werden.

Beispiele für geeignete Antioxidantien sind Ascorbinsäure, sterisch gehinderte Phenole wie beispielsweise 2,6-Di-tert.-butyl-para-hydroxytoluol und Hydrochinon sowie Derivate des Hydrochinons, insbesondere Hydrochinonmonomethylether.

Beispielhaft zu nennende Filmbildehilfsmittel, ausgewählt aus Alkoholen, Ethern und Fettsäureestern sind dem deutschen Arzneibuch (DAB) zu entnehmen.

In einer Ausführungsform der vorliegenden Erfindung enthält im ersten Schritt eingesetzte Dispersion keinen Emulgator, d.h. sie ist emulgatorfrei. Unter Emulgatoren sind dabei kationische, anionische, zwitterionische und insbesondere nicht-ionische oberflächenaktive Verbindungen zu verstehen, beispielsweise Ammoniumsalze von Aminen mit mindestens einer C₁₀-C₄₀-Alkylgruppe, Natrium- oder Kaliumsalze von C₁₀-C₄₀-Alkylsulfaten oder C₁₀-C₄₀-Alkylsulfonaten oder C₈-C₃₀-Alkylbenzolsulfonaten, Natrium-oder Kaliumsalze von zwei- bis zwanzigfach alkoxylierten C₅-C₂₀-Alkanolen, Natrium-oder Kaliumsalze von natürlichen oder synthetischen Fettsäuren, die ein- oder mehrfach ungesättigt oder gesättigt sein können, Esterquats, und ein- bis 100-fach alkoxylierte Oxo- oder Fettalkohole. Unter "keinen Emulgator" bzw. emulgatorfrei ist zu verstehen, dass der Anteil der vorstehend genannten Verbindungen in erfindungsgemäß eingesetzter wässriger Formulierung geringer ist als 0,1 Gew.-% und vorzugsweise unterhalb der Nachweisgrenze.

Weiterhin enthalten die erfindungsgemäß verwendeten Dispersionen Wasser, das vorzugsweise deionisiert ist, d.h. durch Destillation oder mit Hilfe eines Ionenaustauschers gereinigt wurde.

In einer Ausführungsform der vorliegenden Erfindung behandelt man Kunststoff- oder Metalloberfläche mit wässriger Dispersion, die Ethylencopolymer (A) und Base (B) enthält, durch Tauchen, Sprühen, Spritzen, Streichen, Rakeln, Walzen oder elektrophoretisches Lackieren.

Wünscht man das erfindungsgemäße Beschichten durch Tauchen zu bewirken, so erfolgt das Beschichten bei einer Temperatur des betreffenden Tauchbads im Bereich von 15 bis 90°C, bevorzugt bis 70°C und besonders bevorzugt 20 bis 50°C. Dazu kann man das Tauchbad, das Ethylencopolymer (A) und Base (B) enthaltende Formulierung umfasst, heizen. Wünscht man erfindungsgemäß Gegenstände zu beschichten, die eine Kunststoff- oder Metalloberfläche aufweisen, kann man eine erhöhte Temperatur auch automatisch einstellen, indem man das betreffende warme Metall in das Tauchbad, das Ethylencopolymer (A) und Base (B) enthaltende Formulierung umfasst, eintaucht.

Wünscht man das erfindungsgemäße Verfahren durch Sprühen, Spritzen, Streichen, Rakeln, Walzen oder elektrophoretisches Lackieren durchzuführen, so kann man vorzugsweise bei einer Temperatur im Bereich von 15 bis 40°C, bevorzugt 20 bis 35°C arbeiten.

Das erfindungsgemäße Verfahren kann man diskontinuierlich oder bevorzugt kontinuierlich ausführen. Bei einem diskontinuierlichen Verfahren kann es sich beispielsweise um ein Tauchverfahren für Stückgut handeln, bei dem das Stückgut an Gestellen aufgehängt sein oder in perforierten Trommeln als lose Ware vorliegen kann. Ein kontinuierliches Verfahren eignet sich insbesondere zum Behandeln von Bandmetallen. Das Bandmetall wird hierbei durch eine Wanne oder eine Sprühvorrichtung mit einer Formulierung, die erfindungsgemäßes Copolymer enthält, sowie optional durch weitere Vor- oder Nachbehandlungsstationen gefahren.

In einer Variante des erfindungsgemäßen Verfahrens behandelt man die Metall- oder Polymeroberfläche nach einem kontinuierlichen Bandverfahren.

Nach dem eigentlichen Aufbringen von wässriger Formulierung, die Ethylencopolymer (A) und Base (B) enthält, trocknet man. Das Trocknen kann bei Raumtemperatur durch einfaches Verdampfen der flüchtigen Komponenten an Luft bei Raumtemperatur erfolgen.

Das Trocknen kann man auch durch geeignete Hilfsmittel und/oder Hilfsmaßnahmen unterstützen, beispielsweise durch Erwärmen und/oder durch Überleiten von Gasströmen, insbesondere Luftströmen, insbesondere durch Trocknen in einem Trockenkanal. Das Trocknen kann auch durch IR-Strahler unterstützt werden. Bewährt hat sich zum Trocknen eine Temperatur von 40°C bis 160°C, bevorzugt 50°C bis 150°C und besonders bevorzugt 70°C bis 130°C. Gemeint ist die Temperatur auf der Kunststoff- bzw. Metalloberfläche; die Trocknertemperatur muss man gegebenenfalls höher einstellen. Dabei stellt man die Temperatur für den Fall, dass man eine Kunststoffoberfläche behandelt, so ein, dass sie mindestens 5°C unter der Erweichungstemperatur des betreffenden Kunststoffs liegt.

Vor dem eigentlichen Trocknen kann man zum Entfernen überschüssiger Formulierung den Gegenstand abtropfen lassen. Wenn es sich bei der beschichteten Kunststoff- oder Metalloberfläche um Bleche oder Metall- oder Kunststofffolien handelt, so lässt sich überschüssige Formulierung beispielsweise abquetschen oder abrakeln.

Es ist möglich, die Kunststoff- oder Metalloberfläche nach der erfindungsgemäßen Behandlung, aber vor dem Trocknen mit einer Reinigungsflüssigkeit, insbesondere mit Wasser, nachzuspülen, um überschüssige Reste der eingesetzten Formulierung von der erfindungsgemäß behandelten Kunststoff- bzw. Metalloberfläche zu entfernen. Danach trocknet man.

Es ist auch möglich, das Trocknen nach Art eines so genannten "No-rinse" Prozesses durchzuführen. Unmittelbar nach dem Aufbringen von Ethylencopolymer (A) und Base (B) enthaltender Formulierung trocknet man sie ohne vorheriges Abspülen in einem Trockenofen ein.

Durch die Behandlung von Kunststoff- bzw. Metalloberflächen mit wässriger Dispersion, die Ethylencopolymer (A) und Base (B) enthält, werden zumindest Anteile von Ethylencopolymer (A) sowie gegebenenfalls weitere Komponenten der wässrigen Formulierung von der Kunststoff- oder Metalloberfläche physisorbiert oder chemisorbiert, so dass eine feste Verbindung zwischen Kunststoff- bzw. Metalloberfläche und Ethylencopolymer (A) zustande kommt.

In einer Ausführungsform der vorliegenden Erfindung bringt man Ethylencopolymer (A) mit einer Schichtdicke 50 nm bis 50 µm auf, bevorzugt 100 nm bis 10 µm, ganz besonders bevorzugt von 300 nm bis 5 µm. Dabei gelten die Werte für Ethylencopolymer (A) nach dem Trocknen.

Zur Durchführung des erfindungsgemäßen Verfahren versieht man anschließend die mit Ethylencopolymer (A) behandelte Kunststoff- bzw. Metalloberfläche in mindestens einem weiteren Schritt mit mindestens einer weiteren Schicht.

Dazu kann man beispielsweise den vorstehend beschriebenen ersten Schritt wiederholen.

In einer anderen Ausführungsform der vorliegenden Erfindung versieht man im zweiten Schritt des erfindungsgemäßen Verfahrens mit einer anderen Schicht oder mehreren anderen Schichten als im ersten Schritt. Bei der Schicht bzw. den Schichten im zweiten Schritt kann es sich beispielsweise um eine oder mehrere Lackschichten handeln, die als solche bekannt sind und die aus den an sich für Lackschichten üblichen Bestandteilen zusammengesetzt sind. Beispielsweise kann es sich um farb- oder effektgebende Lackschichten handeln. Typische Lacke, deren Zusammensetzung sowie typische Schichtfolgen bei mehreren Lackschichten sind an sich bekannt. Man beobachtet, dass die erfindungsgemäß aufgebrachte Beschichtung mit handelsüblichen Lacken gut überlackierbar ist.

In einer speziellen Variante des erfindungsgemäßen Verfahrens führt man vor der Behandlung mit wässriger Dispersion, die Ethylencopolymer (A) und Base (B) enthält, einen oder mehrere Vorbehandlungsschritte durch.

Zum Zweck der Vorbehandlung kann man die Kunststoff- oder Metalloberfläche, die man erfindungsgemäß mit wässriger Dispersion, die Ethylencopolymer (A) und Base (B) enthält, zu behandeln wünscht, insbesondere Oberfläche aus Metall, zunächst vorbehandeln, beispielsweise reinigen, insbesondere entfetten und/oder entölen. In vielen Ausführungsformen umfasst ein Entfetten bzw. Entölen auch noch einen oder mehrere vorgeschaltete Vorreinigungsschritte. Nach dem gegebenenfalls durchgeführten Vorreinigungsschritt entfernt man verunreinigendes Fett oder Öl, das beispielsweise in Form von Flecken oder einer Öl- bzw. Fettschicht ausgebildet sein kann, im eigentlichen Reinigungsschritt mit Hilfe von mindestens einem Reinigungsbad, beispielsweise durch Eintauchen, oder mit Hilfe von mindestens einem auf die zu reinigende Kunststoff- oder Metalloberfläche aufzubringenden Reinigungsmittel, das man aufsprühen, über die zu reinigende Kunststoff- oder Metalloberfläche gießen oder mit Hilfe beispielsweise eines Schlauches aufspritzen kann. Die Reste an Reinigungsbad bzw. Reinigungsmittel kann man anschließend entfernen, beispielsweise mit einem oder mehreren aufeinander folgenden Spülbädern, und schließlich trocknet man die Kunststoff- oder Metalloberfläche. Entfettungs- bzw. Entölungsbäder müssen in regelmäßigen Abständen entsorgt werden. Zur Entsorgung wird das im Entfettungs- bzw. Entölungsbad angesammelte Fett bzw. Öl in einem weiteren Arbeitsschritt von der wässrigen Phase abgetrennt. Aufgrund der Anwesenheit von Tensiden im Entfettungs- bzw. Entölungsbad sind zur Entsorgung weitere Chemikalien (Demulgatoren, Spalter) als Hilfsmittel erforderlich. Einzelheiten zum Entfetten bzw. Entölen von Metallen sowie dazu hilfreiche Formulierungen und Apparaturen sind beispielsweise unter dem Stichwort "Metals, Surface Treatment", in Ullmann's Encyclopedia of Industrial Chemistry, 6. Auflage, 2000, Wiley-VCH-Verlag GmbH, Weinheim Germany, dargestellt.

In einer Ausführungsform entfettet bzw. entölt man mit einem wässrigen Reinigungs- bzw. Entfettungsbad, bevorzugt in einem alkalischen Reinigungsbad bzw. einem alkalischen Entfettungsbad, das als Tensid ein oder mehrere sulfatierte polyalkoxylierte Fettalkohole oder ein oder mehrere sulfatierte polyalkoxylierte Phenole, beispielsweise jeweils mit einem Molekulargewicht Mₙ im Bereich von 800 bis 3000 g/mol, in einer Konzentration enthält, die beispielsweise im Bereich von 0,01 bis 20 Gew.-%, bevorzugt 0,02 bis 10 Gew.-% und besonders bevorzugt mindestens 0,1 Gew.-% liegen kann. Eingesetztes alkalisches Reinigungs- bzw. Entfettungsbad kann beispielsweise einen pH-Wert im Bereich von 8 bis 14, bevorzugt mindestens 9 und besonders bevorzugt 11 bis 13 aufweisen.

Reinigungs- bzw. Entfettungsbäder, insbesondere alkalische Reinigungs- bzw. Entfettungsbäder können eine Temperatur im Bereich von 10 bis 80°C aufweisen.

Das Reinigen bzw. Entfetten oder Entölen kann man beispielsweise über einen Zeitraum im Bereich von 0,1 bis 30 Sekunden durchführen.

Ein weiterer Gegenstand der vorliegenden Erfindung sind beschichtete Kunststoff- oder Metalloberflächen, erhältlich nach dem erfindungsgemäßen Verfahren. Erfindungsgemäße Kunststoff- bzw. Metalloberflächen zeichnen sich im Allgemeinen durch sehr gute Oberflächengüte, große Härte und in denjenigen Fällen, in denen man in zweiten Schritt eine oder mehrere Lackschichten aufgebracht hat, durch eine vorzügliche Lackhaftung aus.

In einer speziellen Ausführungsform der vorliegenden Erfindung handelt es sich bei erfindungsgemäßen Kunststoff- bzw. Metalloberflächen um beschichtete Hartfolien aus Kunststoff oder Metall. Erfindungsgemäß beschichtete Hartfolien als Kunststoff oder Metall lassen sich beispielsweise zu Blisterverpackungen für Lebensmittel oder pharmazeutische Produkte wie beispielsweise Tabletten oder Zäpfchen verarbeiten.

Ein weiterer Gegenstand der vorliegenden Erfindung sind wässrige Dispersionen mit einem pH-Wert im Bereich von 7 bis 11, bevorzugt 8 bis 9,5, enthaltend
(A) mindestens ein Ethylencopolymer mit einem Molekulargewicht Mₙ im Bereich von 2.000 bis 20.000 g/mol, bevorzugt 3.500 bis 15.000 g/mol, gewählt aus solchen Ethylencopolymeren, die als Comonomere einpolymerisiert enthalten
   (a) 15,5 bis 19.9 Gew.-%, bevorzugt 16 bis 19 Gew.-% Methacrylsäure und
   (b) 80,1 bis 84,5 Gew.-%, bevorzugt 81 bis 84 Gew.-% Ethylen,
(B) mindestens eine Base, gewählt aus basischem Alkalimetallsalz, bevorzugt Alkalimetallhydroxid, beispielsweise Natriumhydroxid oder Kaliumhydroxid, und besonders bevorzugt Ammoniak.

In einer Ausführungsform der vorliegenden Erfindung enthalten erfindungsgemäße wässrige Dispersionen keinen Emulgator. Emulgatoren sind vorstehend definiert.

In einer Ausführungsform der vorliegenden Erfindung weist mindestens ein Ethylencopolymer (A) einen Schmelzflussrate (MFR) im Bereich von 1 bis 150 g/10 min, bevorzugt 5 bis 15 g/10 min, besonders bevorzugt 8 bis 12 g/10 min auf, gemessen bei 160°C und einer Belastung von 325 g nach EN ISO 1133.

Die übrigen physikalischen Eigenschaften der in erfindungsgemäßen wässrigen Dispersionen eingesetzten Ethylencopolymere (A) sind vorstehend beschrieben.

Erfindungsgemäße wässrige Dispersionen sind besonders gut geeignet zur Durchführung des erfindungsgemäßen Verfahrens.

Ein weiterer Gegenstand der vorliegenden Erfindung ist ein Verfahren zur Herstellung von erfindungsgemäßen wässrigen Dispersionen, auch erfindungsgemäßes Dispergierverfahren genannt.

Zur Durchführung des erfindungsgemäßen Dispergierverfahrens vermischt man
(A) mindestens ein Ethylencopolymer mit einem Molekulargewicht Mₙ im Bereich von 2.000 bis 20.000 g/mol, bevorzugt 3.500 bis 15.000 g/mol, gewählt aus solchen Ethylencopolymeren, die als Comonomere einpolymerisiert enthalten
   (a) 15,5 bis 19,9 Gew.-%, bevorzugt 16 bis 19 Gew.-% Methacrylsäure und
   (b) 80,1 bis 84,5 Gew.-%, bevorzugt 81 bis 84 Gew.-% Ethylen,
(B) und mindestens eine Base, gewählt aus basischem Alkalimetallsalz, bevorzugt Alkalimetallhydroxid, beispielsweise Natriumhydroxid oder Kaliumhydroxid, und besonders bevorzugt Ammoniak,
miteinander und mit Wasser bei einer Temperatur oberhalb des Schmelzpunkts von Ethylencopolymer (A).

Zur Durchführung des erfindungsgemäßen Dispergierverfahrens geht man von einem oder mehreren der oben beschriebenen Ethylencopolymere (A) aus. Dieses oder diese platziert man in einem Gefäß, beispielsweise einem Kolben, einem Autoklaven oder einem Kessel und erwärmt das oder die Ethylencopolymere (A), gibt Wasser und eine oder mehrere Basen (B) gegebenenfalls weitere Zuschlagsstoffe (C) zu, wobei die Reihenfolge der Zugabe von Wasser und der Zugabe von Base (B) sowie weiterer Hilfsstoffe (C) beliebig ist. Wenn die gewünschte Temperatur über 100°C liegt, ist es vorteilhaft, unter erhöhtem Druck zu arbeiten und das Gefäß entsprechend zu wählen. Man homogenisiert die entstehende Emulsion oder Dispersion, beispielsweise durch mechanisches oder pneumatisches Rühren oder durch Schütteln. Man erwärmt vorteilhaft auf eine Temperatur über den Schmelzpunkt des oder der Ethylencopolymere (A). Vorteilhaft erwärmt man auf eine Temperatur, die mindestens 10°C, besonders vorteilhaft auf eine Temperatur, die mindestens 30°C über dem Schmelzpunkt des oder der Ethylencopolymere (A) liegt.

Setzt man mehrere verschiedene Ethylencopolymere (A) ein, so erwärmt man auf eine Temperatur, die über dem Schmelzpunkt des bei der höchsten Temperatur schmelzenden Ethylencopolymers (A) liegt. Vorteilhaft erwärmt man in dem Fall, dass man mehrere verschiedene Ethylencopolymere (A) einsetzt, auf eine Temperatur, die mindestens 10°C über dem Schmelzpunkt des bei der höchsten Temperatur schmelzenden Ethylencopolymers (A) liegt. Besonders vorteilhaft erwärmt man in dem Fall, dass man mehrere verschiedene Ethylencopolymere (A) einsetzt, auf eine Temperatur, die mindestens 30°C über dem Schmelzpunkt des bei der höchsten Temperatur schmelzenden Ethylencopolymers (A) liegt.

Anschließend lässt man die so hergestellte erfindungsgemäße wässrige Dispersion abkühlen.

Die nach dem erfindungsgemäßen Dispergierverfahren hergestellten wässrigen Dispersionen zeichnen sich durch gute Lagerstabilität aus und lassen sich gut im oben beschriebenen erfindungsgemäßen Behandlungsverfahren einsetzen.

Ein weiterer Gegenstand der vorliegenden Erfindung sind Ethylencopolymer mit einem Molekulargewicht Mₙ im Bereich von 2.000 bis 20.000 g/mol, bevorzugt 3.500 bis 15.000 g/mol, und einem Schmelzflussrate (MFR) im Bereich von 5 bis 15 g/10 Minuten, gemessen bei 160°C und einer Belastung von 325 g nach EN ISO 1133, das als Comonomere einpolymerisiert enthält
(a) 15,5 bis 19,9 Gew.-%, bevorzugt 16 bis 19 Gew.-% Methacrylsäure und
(b) 80,1 bis 84,5 Gew.-%, bevorzugt 81 bis 84 Gew.-% Ethylen,
als freie Säure oder partiell oder vollständig neutralisiert.

Zur Neutralisation von erfindungsgemäßem Ethylencopolymer kann man beispielsweise Alkalimetallhydroxid wie beispielsweise Natriumhydroxid oder Kaliumhydroxid einsetzen oder besonders bevorzugt Ammoniak, insbesondere als wässrige Lösung erfindungsgemäßes Ethylencopolymer kann man wie vorstehend beschrieben herstellen.

Die Erfindung wird durch Arbeitsbeispiele erläutert.

### Arbeitsbeispiele

### 1. Herstellung von erfindungsgemäßem Ethylencopolymer

In einem Hochdruckautoklaven, wie er in der Literatur beschrieben ist (M. Buback et al., Chem. Ing. Tech. 1994, 66, 510), wurden Ethylen und Methacrylsäure copolymerisiert. Dazu wurde Ethylen (12,0 kg/h) unter dem Reaktionsdruck von 1700 bar in den Hochdruckautoklaven kontinuierlich eingespeist. Getrennt davon wurde die in Tabelle 1 angegebene Menge Methacrylsäure zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Getrennt davon wurde die in Tabelle 1 angegebene Menge Initiatorlösung, bestehend aus tert.-Amylperoxypivalat (in Isododekan, Konzentration siehe Tabelle 1), unter dem Reaktionsdruck von 1700 bar in den Hochdruckautoklaven kontinuierlich eingespeist. Getrennt davon wurde die in Tabelle 1 angegebene Menge Regler, bestehend aus Propionaldehyd in Isododekan, Konzentration siehe Tabelle 1, zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Die Reaktionstemperatur betrug etwa 210°C (s. Tabelle 1). Man erhielt erfindungsgemäßes Ethylencopolymer mit den aus Tabelle 2 ersichtlichen analytischen Daten.

**Tabelle 1: Herstellung erfindungsgemäßer Ethylencopolymere (A)**

| Nr. | T_{Reaktor}[°C] | Ethylen [kg/h] | MAS [ml/h] | PA in ID [ml/h] | c(PA) | PO in ID [I/h] | c(PO) | Umsatz [Gew.-%] | Austrag (A) [kg/h] |
|---|---|---|---|---|---|---|---|---|---|
| (A.1) | 203 | 12 | 490 | 950 | 0,11 | 2,47 | 0,025 | 21 | 2,6 |
| (A.2) | 214 | 12 | 440 | 500 | 0,25 | 2,57 | 0,020 | 18 | 2,3 |
| (A.3) | 210 | 12 | 540 | 980 | 0,25 | 1,53 | 0,025 | 19 | 2,4 |
| (A.4) | 213 | 12 | 575 | 450 | 0,14 | 2,53 | 0,035 | 21 | 2,6 |
| (A.5) | 200 | 12 | 570 | 1100 | 0,11 | 1,61 | 0,025 | 17 | 2,2 |

Unter T_{Reaktor} ist die maximale Innentemperatur des Hochdruckautoklaven zu verstehen.
Abkürzungen: MAS: Methacrylsäure, PA: Propionaldehyd, ID: Isododekan (2,2,4,6,6-Pentamethylheptan), PA in ID: Lösung von Propionaldehyd in Isododekan, Gesamtvolumen der Lösung.

PO: tert.-Amylperoxypivalat,
c(PA): Konzentration von PA in ID in Volumenprozent,
c(PO): Konzentration von PO in ID in mol/l
Der Umsatz bezieht sich auf Ethylen und ist in Gew.-% angegeben

**Tabelle 2: Analytische Daten erfindungsgemäßer Ethylencopolymere (A)**

| Nr. | Gehalt Ethylen [Gew.-%] | Gehalt MAS [Gew.-%] | Säurezahl [mg KOH/g ECW] | ν [mm²/s] | MFR | Tₘₑₗₜ [°C] | ρ [g/cm³] |
|---|---|---|---|---|---|---|---|
| (A.1) | 83,6 | 16,4 | 106,7 | 45.000 | n.b. | n.b. | n.b. |
| (A.2) | 83,2 | 16,8 | 109,4 | n.b. | 74 | n.b. | n.b. |
| (A.3) | 82,3 | 17,7 | 115,6 | 45.000 | n.b. | n.b. | n.b. |
| (A.4) | 82,0 | 18,0 | 117,6 | 45.000 | n.b. | 86,6 | 0,9657 |
| (A.5) | 80,4 | 19,6 | 127,9 | n.b. | 70 | n.b. | n.b. |

Der MFR wurde stets gemessen bei 160°C und einer Belastung von 325 g nach EN ISO 1133.
n.b.: nicht bestimmt.

Unter "Gehalt" ist der Anteil an einpolymerisiertem Ethylen bzw. MAS im jeweiligen Ethylencopolymer zu verstehen.
ν: dynamische Schmelzeviskosität, gemessen bei 120°C nach DIN 51562, Der Gehalt an Ethylen und Methacrylsäure in den erfindungsgemäßen Ethylencopolymeren wurde NMR-spektroskopisch bzw. durch Titration (Säurezahl) bestimmt. Die Säurezahl des Ethylencopolymers wurde titrimetrisch nach DIN 53402 bestimmt. Der KOH-Verbrauch korrespondiert mit dem Methacrylsäure-Gehalt im Ethylencopolymer. Die Dichte wurde bestimmt nach DIN 53479. Der Schmelzbereich wurde bestimmt durch DSC (Differential scanning calorimetry, Differentialthermoanalyse) nach DIN 51007 bestimmt.

### II. Erfindungsgemäße Behandlung von Metalloberflächen

### II.1 Vorbereitung der Metalloberflächen, allgemeine Bemerkungen

Für die Beispiele und Vergleichsbeispiele wurden Prüfbleche aus Al 99,9, Zn 99,8 oder heiß- oder elektrolytisch verzinktem Stahl (0,01 bis 20 µm einseitige Zinkauflage) oder Baustahl St 1.0037 eingesetzt.

Man setzte jeweils eine 15 Gew.-% wässrige Lösung des betreffenden Ethylencopolymers (A) ein. Die wässrige Lösung von jeweiligem Ethylencopolymer (A) wurde homogenisiert und in ein Tauchbad gefüllt. Die vorgereinigten Prüfbleche wurden über die angegebene Zeit eingetaucht und danach bei 80°C bis zur Gewichtskonstanz getrocknet. Abschließend wurden die Ränder der beschichteten Bleche abgeklebt, um bei der Beurteilung Randeffekte auszuschließen.

Die Dicke der Passivierungsschicht wurde durch Differenzwägung vor und nach Einwirken der erfindungsgemäß eingesetzten Zusammensetzung auf die Metalloberfläche und unter der Annahme ermittelt, dass die Schicht eine Dichte von 1 kg/l aufweist. Im Folgenden wird unter "Schichtdicke" immer eine derartig ermittelte Größe verstanden, unabhängig davon, welche Dichte die Schicht tatsächlich aufwies.

Die korrosionsinhibierende Wirkung wurde mittels eines Salzsprühtests in einer Salzsprühnebelatmosphäre nach DIN 50021 ermittelt. Je nach Art der Korrosionsschäden wurde die Standzeit im Korrosionstest unterschiedlich definiert.

Bildeten sich weiße Flecken von im Allgemeinen mehr als 1 mm Durchmesser (Zn- oder Al-Oxid, sogenannter Weißrost), so wurde die Standzeit als die Zeit angegeben, nach der das Schadbild dem Bewertungsgrad 8 in DIN EN ISO 10289 vom April 2001, Anhang B, Seite 19, entspricht.

Die Beurteilung des Korrosionsschadbildes erfolgt in Flächenrostindizes von R10 (keine Rosterscheinungen) bis R0 (komplette Rostbedeckung). Entscheidend für die Beurteilung der Korrosionsstabilität und damit Leistungsfähigkeit des Systems ist jene Zeit, die zu einer Überschreitung des Rostindizes R8, d.h. einen Flächenrostanteil von >5% führt.

In den nachfolgenden Beispielen wurde zunächst alkalisch gebeizt:

In einer Kunststoffwanne mit zwei flächigen Elektroden (Edelstahl oder Graphit), die eine größere Oberfläche als das jeweilige Prüfblech hatten, wurde eine Lösung eines alkalischen Bads folgender Zusammensetzung eingesetzt:
20 g NaOH
22 g Na₂CO₃
1 g EDTA-Na₄
20 g mit im Mittel 9 Äquivalenten Ethylenoxid ethoxyliertem gesättigtem C₁₃-Oxoalkohol [C₁₃(EO)₉]
940 ml destilliertes Wasser.

Zur Herstellung des alkalischen Bades löste man NaOH und Na₂CO₃ in destilliertem Wasser nacheinander unter Rühren. Parallel dazu löste man [C₁₃(EO)₉] und EDTA-Na₄ getrennt in destilliertem Wasser vor, wobei dies bei der EDTA-Na₄-Lösung bei einer Temperatur von 50°C erfolgt. Die wässrigen Lösungen von [C₁₃(EO)₉] und EDTA-Na₄ wurden anschließend zu der NaOH-Na₂CO₃-Lösung in einen Messzylinder gegeben, auf Zimmertemperatur abgekühlt und mit destilliertem Wasser auf 1000 ml aufgefüllt.

Prüfblech mit den Abmessungen 50 mm · 20 mm · 1 mm wurde mit einem Papierlappen abgewischt und bei 10 Volt in das alkalische Bad zwischen den Elektroden eingetaucht und als Kathode geschaltet. Die Spannung wurde so justiert, dass die Stromstärke 1 A betrug. Nach zehn Sekunden wurde das Prüfblech aus dem alkalischen Bad herausgenommen und fünf Sekunden unter fließendem vollentsalztem Wasser gespült.

### III.2.1 Versuch mit Copolymer (A.1)

Beschichtung aus (A.1) auf St 1.0037

Man tauchte wie vorstehend vorbehandelte Prüfbleche einmalig für 10 Sekunden in eine 15 Gew.-% wässrige Lösung von (A.1) (Prüflösung) und trocknete anschließend 60 Minuten bei Zimmertemperatur und 60 Minuten bei 120°C.
Schichtdicke: 3,5 µm.

Die beschichteten Prüfbleche zeigten keine Veränderungen hinsichtlich der Farbe und des metallischen Glanzes im Vergleich mit dem unbehandelten Prüfblech. Verweilzeit bis zur Beurteilung 8 in einer 5%igen Salzsprühnebelatmosphäre bei 30°C: über 10 Stunden.

### III.2.2Versuch mit Copolymer (A.2)

Beschichtung aus (A.2) auf St 1.0037

Man tauchte wie vorstehend vorbehandelte Prüfbleche einmalig für 10 Sekunden in eine 15 Gew.-% wässrige Lösung von (A.2) (Prüflösung) und trocknete anschließend 60 Minuten bei Zimmertemperatur und 60 Minuten bei 120°C.
Schichtdicke: 4 µm.
Die beschichteten Prüfbleche zeigten keine Veränderungen hinsichtlich der Farbe und des metallischen Glanzes im Vergleich mit dem unbehandelten Prüfblech. Verweilzeit bis zur Beurteilung 8 in einer 5%igen Salzsprühnebelatmosphäre bei 30°C: 8 Stunden.

### III.2.3 Versuch mit Copolymer (A.3)

Beschichtung aus (A.3) auf St 1.0037

Man tauchte wie vorstehend vorbehandelte Prüfbleche einmalig für 10 Sekunden in eine 15 Gew.-% wässrige Lösung von (A.3) und trocknete anschließend 60 Minuten bei Zimmertemperatur und 60 Minuten bei 120°C.
Schichtdicke: 5,5 µm.

Die beschichteten Prüfbleche zeigten keine Veränderungen hinsichtlich der Farbe und des metallischen Glanzes im Vergleich mit dem unbehandelten Prüfblech. Verweilzeit bis zur Beurteilung 8 in einer 5%igen Salzsprühnebelatmosphäre bei 30°C:
über 18 Stunden.

### Vergleichsbeispiele

### Vergleichsbeispiel V1

### "Nullblech" ohne Beschichtung

Verweilzeit bis zur Beurteilung 8 in einer 5% Salzsprühnebelatmosphäre bei 30°C ist weniger als 1 Stunde.

### Vergleichsbeispiel V2: Passivierungsschicht mit H₃PO₄ (Phosphatierung)

Man tauchte Prüfbleche einmalig für 10 Sekunden in eine wässrige 0,1 bzw.0,5 oder 1 Gew.-% Phosphorsäure.
Verweilzeit bis zur Beurteilung 8 in einer 5% Salzsprühnebelatmosphäre bei 30°C: jeweils weniger als 2 Stunden.

## Patentansprüche

1. Verfahren zum Beschichten von Kunststoff- oder Metalloberflächen, **dadurch gekennzeichnet, dass** man in einem Schritt die betreffende Kunststoff- oder Metalloberfläche mit einer wässrigen Dispersion behandelt, enthaltend
(A) mindestens ein Ethylencopolymer mit einem Molekulargewicht Mₙ im Bereich von 2.000 bis 20.000 g/mol und einer Schmeizflussrate (MFR) im Bereich von 1 bis 150 g/10 min aufweist, gemessen bei 160°C und einer Belastung von 325 g nach EN ISO 1133, gewählt aus solchen Ethylencopolymeren, die als Comonomere einpolymerisiert enthalten
(a) 15,5 bis 19,9 Gew.-% mindestens einer ethylenisch ungesättigten C₃-C₁₀-Carbonsäure und
(b) 80,1 bis 84,5 Ges.-% Ethylen,
(B) mindestens eine Base,
und dass man danach die betreffende Metall- bzw. Kunststoffoberfläche in mindestens einem weiteren Schritt mit mindestens einer weiteren Schicht versieht.

2. Verfahren nach Anspruch 1, **dadurch gekennzeichnet, dass** mindestens ein Ethylencopolymer (A) einen Schmelzflussrate (MFR) im Bereich von 5 bis 15 g/10 min aufweist, gemessen bei 160°C und einer Belastung von 325 g nach EN ISO 1133.

3. Verfahren nach Anspruch 1 oder 2, **dadurch gekennzeichnet, dass** mindestens eine ethylenisch ungesättigte C₄-C₁₀-Carbonsäure (a) Methacrylsäure ist.

4. Verfahren nach einem der Ansprüche 1 bis 3, **dadurch gekennzeichnet, dass** die eingesetzte wässrige Dispersion einen pH-Wert im Bereich von 7 bis 10 aufweist.

5. Verfahren nach einem der Ansprüche 1 bis 4, **dadurch gekennzeichnet, dass** Base (B) gewählt wird aus Alkalimetallhydroxid, Amin und Ammoniak.

6. Verfahren nach einem der Ansprüche 1 bis 5, **dadurch gekennzeichnet, dass** die eingesetzte wässrige Dispersion keinen Emulgator enthält.

7. Verfahren nach einem der Ansprüche 1 bis 6, **dadurch gekennzeichnet, dass** man nach der Behandlung mit Wässriger Dispersion trocknet und danach eine weitere Schicht aufbringt.

8. Verfahren nach einem der Ansprüche 1 bis 7, **dadurch gekennzeichnet, dass** es sich bei der weiteren Schicht um eine oder mehrere Lackschichten handelt.

9. Kunststoff- oder Metalloberflächen, beschichtet nach einem Verfahren nach mindestens einem der Ansprüche 1 bis 8.

10. Wässrige Dispersionen mit einem pH-Wert im Bereich von 7 bis 10, enthaltend
(A) mindestens ein Ethylencopolymer mit einem Molekulargewicht Mₙ im Bereich von 2.000 bis 20.000 g/mol und einer Schmelzflussrate (MFR) im Bereich von 1 bis 150 g/10 min aufweist, gemessen bei 160°C und einer Belastung von 325 g nach EN ISO 1133, gewählt aus solchen Ethylencopolymeren, die als Comonomere einpolymerisiert enthalten
(a) 15,5 bis 19,9 Gew.-% Methacrylsäure und
(b) 80,1 bis 84,5 Gew.-% Ethylen,
(B) mindestens eine Base, gewählt aus Alkalimetallhydroxid und Ammoniak.

11. Wässrige Dispersion nach Anspruch 10, **dadurch gekennzeichnet, dass** sie keinen Emulgator enthält.

12. Verfahren zur Herstellung von wässrigen Dispersionen nach Anspruch 10 oder 11, **dadurch gekennzeichnet, dass** man
(A) mindestens ein Ethylencopolymer mit einem Molekulargewicht Mₙ im Bereich von 2.000 bis 20.000 g/mol und einer Schmelzflussrate (MFR) im Bereich von 1 bis 150 g/10 min aufweist, gemessen bei 160°C und einer Belastung von 325 g nach EN ISO 1133, gewählt aus solchen Ethylencopolymeren, die als Comonomere einpolymerisiert enthalten
(a) 15,5 bis 19,9 Gew.-% Methacrylsäure und
(b) 80,1 bis 84,5 Gew.-% Ethylen,
(B) und mindestens eine Base, gewählt aus Alkalimetallhydroxid und Ammoniak,
miteinander und mit Wasser bei einer Temperatur oberhalb des Schmelzpunkts von Ethylencopolymer (A) vermischt.

13. Ethylencopolymer mit einem Molekulargewicht Mₙ im Bereich von 2.000 bis 20.000 g/mol und einer Schmelzflussrate (MFR) im Bereich von 5 bis 15 g/10 min, gemessen bei 160°C und einer Belastung von 325 g nach EN ISO 1133, das als Comonomere einpolymerisiert enthält
(a) 15,5 bis 19,9 Gew.-% Methacrylsäure und
(b) 80,1 bis 84,5 Gew.-% Ethylen,
als freie Säure oder partiell oder vollständig neutralisiert.

## Claims

1. A method of coating a surface of plastic or metal, which comprises treating in one step the plastic or metal surface in question with an aqueous dispersion comprising
(A) at least one ethylene copolymer having a molecular weight Mₙ in the range from 2000 to 20 000 g/mol and a melt flow rate (MFR) in the range from 1 to 150 g/10 min, measured at 160°C under a load of 325 g in accordance with EN ISO 1133, selected from ethylene copolymers comprising as comonomers in copolymerized form
(a) 15.5% to 19.9% by weight of at least one ethylenically unsaturated C₃-C₁₀ carboxylic acid and
(b) 80.1 % to 84.5% by weight of ethylene,
(B) at least one base,
and thereafter providing in at least one further step the metal or plastic surface in question with at least one further coat.

2. The method according to claim 1, wherein at least one ethylene copolymer (A) has a melt flow rate (MFR) in the range from 5 to 15 g/10 min, measured at 160°C under a load of 325 g in accordance with EN ISO 1133.

3. The method according to claim 1 or 2, wherein at least one ethylenically unsaturated C₃-C₁₀ carboxylic acid (a) is methacrylic acid.

4. The method according to any one of claims 1 to 3, wherein the aqueous dispersion used has a pH in the range from 7 to 10.

5. The method according to any one of claims 1 to 4, wherein base (B) is selected from alkali metal hydroxide, amine, and ammonia.

6. The method according to any one of claims 1 to 5, wherein the aqueous dispersion used comprises no emulsifier.

7. The method according to any one of claims 1 to 6, wherein the aqueous dispersion treatment is followed by drying and thereafter by application of a further coat.

8. The method according to any one of claims 1 to 7, wherein the further coat comprises one or more paint coats.

9. A surface of plastic or of metal coated by a method according to at least one of claims 1 to 8.

10. An aqueous dispersion having a pH in the range from 7 to 10, comprising
(A) at least one ethylene copolymer having a molecular weight Mₙ in the range from 2000 to 20 000 g/mol and a melt flow rate (MFR) in the range from 1 to 150 g/10 min, measured at 160°C under a load of 325 g in accordance with EN ISO 1133, selected from ethylene copolymers comprising as comonomers in copolymerized form
(a) 15.5% to 19.9% by weight of methacrylic acid and
(b) 80.1 % to 84.5% by weight of ethylene,
(B) at least one base selected from alkali metal hydroxide and ammonia.

11. The aqueous dispersion according to claim 10, which comprises no emulsifier.

12. A method of preparing an aqueous dispersion according to claim 10 or 11, which comprises mixing
(A) at least one ethylene copolymer having a molecular weight Mₙ in the range from 2000 to 20 000 g/mol and a melt flow rate (MFR) in the range from 1 to 150g/10 min, measured at 160°C under a load of 325 g in accordance with EN ISO 1133, selected from ethylene copolymers comprising as comonomers in copolymerized form
(a) 15.5% to 19.9% by weight of methacrylic acid and
(b) 80.1 % to 84.5% by weight of ethylene,
(B) and at least one base selected from alkali metal hydroxide and ammonia
with one another and with water at a temperature above the melting point of ethylene copolymer (A).

13. An ethylene copolymer having a molecular weight Mₙ in the range from 2000 to 20 000 g/mol and a melt flow rate (MFR) in the range from 5 to 15 g/10 min, measured at 160°C under a load of 325 g in accordance with EN ISO 1133, and comprising as comonomers in copolymerized form
(a) 15.5% to 19.9% by weight of methacrylic acid and
(b) 80.1 % to 84.5% by weight of ethylene,
as a free acid or in partially or fully neutralized form.

## Revendications

1. Procédé de revêtement de surfaces plastiques ou métalliques, **caractérisé en ce que** lors d'une étape, la surface plastique ou métallique concernée est traitée avec une dispersion aqueuse qui contient
(A) au moins un copolymère d'éthylène ayant un poids moléculaire Mₙ dans la plage allant de 2 000 à 20 000 g/mol et un indice de fluidité (MFR) dans la plage allant de 1 à 150 g/10 min, mesuré à 160 °C et avec une charge de 325 g selon EN ISO 1133, choisi parmi de tels copolymères d'éthylène qui contiennent en tant que comonomères polymérisés
(a) 15,5 à 19,9 % en poids d'au moins un acide carboxylique éthyléniquement insaturé en C₃-C₁₀ et
(b) 80,1 à 84,5 % en poids d'éthylène,
(B) au moins une base,
puis **en ce que** la surface métallique ou plastique concernée est munie d'au moins une couche supplémentaire lors d'au moins une étape supplémentaire.

2. Procédé selon la revendication 1, **caractérisé en ce qu'**au moins un copolymère d'éthylène (A) présente un indice de fluidité (MFR) dans la plage allant de 5 à 15 g/10 min, mesuré à 160 °C et avec une charge de 325 g selon EN ISO 1133.

3. Procédé selon la revendication 1 ou 2, **caractérisé en ce qu'**au moins un acide carboxylique éthyléniquement insaturé en C₃-C₁₀ (a) est l'acide méthacrylique.

4. Procédé selon l'une quelconque des revendications 1 à 3, **caractérisé en ce que** la dispersion aqueuse utilisée présente un pH dans la plage allant de 7 à 10.

5. Procédé selon l'une quelconque des revendications 1 à 4, **caractérisé en ce que** la base (B) est choisie parmi un hydroxyde de métal alcalin, une amine et l'ammoniac.

6. Procédé selon l'une quelconque des revendications 1 à 5, **caractérisé en ce que** la dispersion aqueuse utilisée ne contient pas d'émulsifiant.

7. Procédé selon l'une quelconque des revendications 1 à 6, **caractérisé en ce qu'**un séchage est réalisé après le traitement avec la dispersion aqueuse, puis une couche supplémentaire est appliquée.

8. Procédé selon l'une quelconque des revendications 1 à 7, **caractérisé en ce que** la couche supplémentaire est une ou plusieurs couches de laque.

9. Surfaces plastiques ou métalliques, revêtues selon un procédé selon au moins l'une quelconque des revendications 1 à 8.

10. Dispersions aqueuses ayant un pH dans la plage allant de 7 à 10, contenant
(A) au moins un copolymère d'éthylène ayant un poids moléculaire Mₙ dans la plage allant de 2 000 à 20 000 g/mol et un indice de fluidité (MFR) dans la plage allant de 1 à 150 g/10 min, mesuré à 160 °C et avec une charge de 325 g selon EN ISO 1133, choisi parmi de tels copolymères d'éthylène qui contiennent en tant que comonomères polymérisés
(a) 15,5 à 19,9 % en poids d'acide méthacrylique et
(b) 80,1 à 84,5 % en poids d'éthylène,
(B) au moins une base, choisie parmi un hydroxyde de métal alcalin et l'ammoniac.

11. Dispersion aqueuse selon la revendication 10, **caractérisée en ce qu'**elle ne contient pas d'émulsifiant.

12. Procédé de fabrication de dispersions aqueuses selon la revendication 10 ou 11, **caractérisé en ce que**
(A) au moins un copolymère d'éthylène ayant un poids moléculaire Mₙ dans la plage allant de 2 000 à 20 000 g/mol et un indice de fluidité (MFR) dans la plage allant de 1 à 150 g/10 min, mesuré à 160 °C et avec une charge de 325 g selon EN ISO 1133, choisi parmi de tels copolymères d'éthylène qui contiennent en tant que comonomères polymérisés
(a) 15,5 à 19,9 % en poids d'acide méthacrylique et
(b) 80,1 à 84,5 % en poids d'éthylène,
et
(B) au moins une base, choisie parmi un hydroxyde de métal alcalin et l'ammoniac
sont mélangés l'un avec l' autre et avec de l' eau à une température supérieure au point de fusion du copolymère d'éthylène (A).

13. Copolymère d'éthylène ayant un poids moléculaire Mₙ dans la plage allant de 2 000 à 20 000 g/mol et un indice de fluidité (MFR) dans la plage allant de 5 à 15 g/10 min, mesuré à 160 °C et avec une charge de 325 g selon EN ISO 1133, qui contient en tant que comonomères polymérisés
(a) 15,5 à 19,9 % % en poids d'acide méthacrylique et
(b) 80,1 à 84,5 % % en poids d'éthylène,
sous la forme d'acide libre ou partiellement ou totalement neutralisé.
